# EUROPEAN PATENT APPLICATION

(11) **EP 3 306 439 A1**
(43) Date of publication of application: **11.04.2018**
(21) Application number: 17194839.1
(22) Date of filing: 04.10.2017
(51) Int. Cl.: G06F 1/16, H04M 1/02

(54) **ELECTRONIC DEVICE HAVING FLEXIBLE DISPLAY**

(30) Priority: 10.10.2016 KR 20160130520 P
(71) Applicant: Samsung Electronics Co., Ltd., Gyeonggi-do 16677 (KR)
(72) Inventor: PRUSHINSKIY, Valeriy, 18445 Gyeonggi-do, (KR); FEYGENSON, Oleg, 18445 Gyeonggi-do, (KR); LEE, Jun Young, 18454 Gyeonggi-do, (KR)
(74) Representative: HGF Limited

(57) **Abstract**

An electronic device includes a display, at least a portion of which is implemented in a flexible form, and first, second and third bodies on which the flexible display is mounted. The second body may be disposed between the first body and the third body. The first body may rotate about a first virtual axis between the first and second bodies. The third body may rotate about a second virtual axis between the second and third bodies. In addition, various other embodiments recognized through the present specification are possible.

## Description

### PRIORITY

This application is related to and claims priority to Korean Application No. 10-2016-0130520 filed on October 10, 2016, the contents of which are incorporated herein by reference.

### BACKGROUND OF THE INVENTION

### 1. Field of the Invention

Various embodiments of the present disclosure relate to an electronic device having a flexible display.

### 2. Background of the Invention

Electronic devices, such as smartphones, tablet PCs, and the like, may output contents, for example, images, text, and the like through displays thereof. Electronic devices having various forms of displays have been released, and in recent years, electronic devices equipped with flexible displays have been developed.

Electronic devices having flexible displays may provide efficiencies in space utilization since the displays are foldable or bendable. Electronic devices having flexible displays may be thin and lightweight, and the displays may not be easily broken or damaged.

Flexible displays may be applied to various fields, such as wearable devices, automotive displays, digital signage, and the like, as well as smartphones. Flexible displays may be classified into curved displays, bendable displays, rollable displays, and the like according to flexibility. Curved displays may be fixed in a curved shape and thus may not be deformed. Bendable displays may be bent just partly. Rollable displays may be freely rolled up or folded. Rollable displays may provide significantly improved efficiency in space utilization.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

To address the above-discussed deficiencies, it is a primary object to provide flexible displays for electronic devices in the related art that are implemented by a method of folding the flexible displays in one direction, a method of sliding the flexible displays, a method of unfolding the flexible displays to the left and right, or the like. The process of unfolding the flexible displays of the electronic devices in the related art is complicated. The electronic devices in the related art differ from mobile devices, such as general rectangular smartphones, tablet PCs, or the like, in size or shape so that users may feel an inconvenience to use the electronic devices.

Aspects of the present disclosure are to address at least the above-mentioned problems and/or disadvantages and to provide at least the advantages described below.

In accordance with an aspect of the present disclosure, an electronic device includes a display, at least a portion of which is implemented in a flexible form, and first to third bodies on which the flexible display is mounted. The second body may be disposed between the first body and the third body. The first body may rotate about a first virtual axis between the first and second bodies. The third body may rotate about a second virtual axis between the second and third bodies.

According to various embodiments of the present disclosure, left and right parts of an electronic device may be folded toward the rear side of the electronic device.

According to various embodiments of the present disclosure, an electronic device in a folded state may be used in the same way as a general smartphone and may be used in the form of a double-sided display.

According to various embodiments of the present disclosure, an electronic device in an unfolded state may simultaneously output a large amount of contents by using a wide screen.

According to various embodiments of the present disclosure, an electronic device may change in shape such that left and right parts thereof are perpendicular to each other and may be used in an upright position.

According to various embodiments of the present disclosure, an electronic device may be worn on a part of a human body in a state in which left and right parts of the electronic device are coupled parallel to each other.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an electronic device having a flexible display, according to various embodiments;
FIG. 2A illustrates an unfolded state of the electronic device, according to various embodiments;
FIG. 2B illustrates a folded state of the electronic device, according to various embodiments;
FIG. 3 illustrates an example of the use of the electronic device in an unfolded state, according to various embodiments;
FIG. 4 illustrates an example of the use of the electronic device in a folded state, according to various embodiments;
FIG. 5 illustrates an example in which the electronic device is used in a three-dimensional form, according to various embodiments;
FIG. 6A illustrates an example in which the electronic device is used in a wearable form, according to various embodiments;
FIG. 6B illustrates an example of the use of the electronic device in the case where a portion of the display is implemented with a transparent display, according to various embodiments;
FIG. 7 illustrates an electronic device in a tablet form, according to various embodiments;
FIG. 8 illustrates the rear side of the electronic device of FIG. 7, according to various embodiments;
FIG. 9 illustrates an electronic device in a network environment, according to various embodiments; and
FIG. 10 is a block diagram of an electronic device according to various embodiments.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

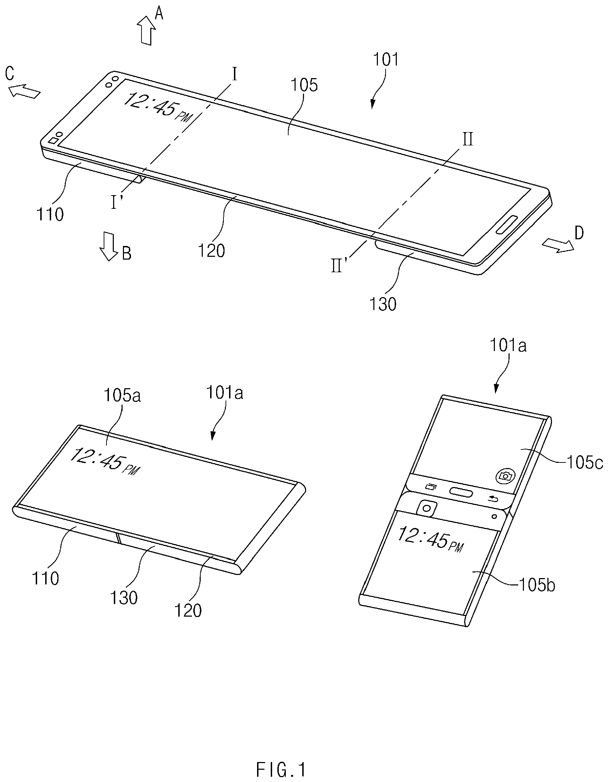

FIGS. 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device.

Hereinafter, various embodiments of the present disclosure will be described with reference to the accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (for example, elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the present disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to the other element or an intervening element (for example, a third element) may be present. In contrast, when an element (for example, a first element) is referred to as being "directly coupled with/to" or "directly connected to" another element (for example, a second element), it should be understood that there are no intervening element (for example, a third element).

According to the situation, the expression "configured to" used herein may be used as, for example, the expression "suitable for", "having the capacity to", "designed to", "adapted to", "made to", or "capable of". The term "configured to (or set to)" must not mean only "specifically designed to" in hardware. Instead, the expression "a device configured to" may mean that the device is "capable of" operating together with another device or other components. CPU, for example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of: smartphones, tablet personal computers (PCs), mobile phones, video telephones, electronic book readers, desktop PCs, laptop PCs, netbook computers, workstations, servers, personal digital assistants (PDAs), portable multimedia players (PMPs), MP3 players, mobile medical devices, cameras, or wearable devices. According to various embodiments of the present disclosure, the wearable devices may include: accessories (for example, watches, rings, bracelets, ankle bracelets, glasses, contact lenses, or head-mounted devices (HMDs)), cloth-integrated types (for example, electronic clothes), body-attached types (for example, skin pads or tattoos), or implantable types (for example, implantable circuits).

In some embodiments of the present disclosure, the electronic device may be a home appliance. The home appliance may include, for example, at least one of a digital video disk (DVD) player, an audio, a refrigerator, an air conditioner, a cleaner, an oven, a microwave oven, a washing machine, an air cleaner, a set-top box, a home automation control panel, a security control panel, a TV box (for example, Samsung HomeSync™, Apple TV™, or Google TV™), a game console (for example, Xbox™ or PlayStation™), an electronic dictionary, an electronic key, a camcorder, or an electronic panel.

In another embodiment of the present disclosure, the electronic device may include at least one of various medical devices (for example, various portable medical measurement devices (a blood glucose meter, a heart rate measuring device, a blood pressure measuring device, and a body temperature measuring device), a magnetic resonance angiography (MRA), a magnetic resonance imaging (MRI) device, a computed tomography (CT) device, a photographing device, and an ultrasonic device), a navigation system, a global navigation satellite system (GNSS), an event data recorder (EDR), a flight data recorder (FDR), a vehicular infotainment device, electronic devices for vessels (for example, a navigation device for vessels and a gyro compass), avionics, a security device, a vehicular head unit, an industrial or home robot, an automatic teller's machine (ATM) of a financial company, a point of sales (POS) of a store, or an internet of things (for example, a bulb, various sensors, an electricity or gas meter, a spring cooler device, a fire alarm device, a thermostat, an electric pole, a toaster, a sporting apparatus, a hot water tank, a heater, and a boiler).

According to some embodiments of the present disclosure, the electronic device may include at least one of a furniture or a part of a building/structure, an electronic board, an electronic signature receiving device, a projector, or various measurement devices (for example, a water service, electricity, gas, or electric wave measuring device). In various embodiments of the present disclosure, the electronic device may be one or a combination of the aforementioned devices. The electronic device according to some embodiments of the present disclosure may be a flexible electronic device. Further, the electronic device according to an embodiment of the present disclosure is not limited to the aforementioned devices, but may include new electronic devices produced due to the development of technologies.

Hereinafter, electronic devices according to an embodiment of the present disclosure will be described with reference to the accompanying drawings. The term "user" used herein may refer to a person who uses an electronic device or may refer to a device (for example, an artificial electronic device) that uses an electronic device.

FIG. 1 illustrates an electronic device having a flexible display, according to various embodiments.

Referring to FIG. 1, an electronic device 101 includes a flexible display 105, at least a portion of which is foldable or bendable, and bodies (or housings) 110, 120, and 130 on which the display 105 is mounted. Among the bodies 110, 120, and 130, the first body (or the first housing) 110 and the third body (or the third housing) 130 may be unfolded (opened or separated) to the left side and the right side of the electronic device 101 (in the directions C and D), or may be folded (closed or adjacent) toward the rear side of the electronic device 101 (in the direction B). The second body (or the second housing) 120 may be disposed between the first body 110 and the third body 130.

In the case where the bodies 110 and 130 are unfolded, the electronic device 101 may simultaneously provide a large amount of contents (text, images, videos, and the like) to a user through a wide screen. In contrast, in the case where the bodies 110 and 130 are folded, portability of the electronic device 101 may be enhanced. The user is able to carry the folded electronic device 101 in his/her hand, or may store the folded electronic device 101 in his/her bag or pocket.

The display 105 may be mounted on a first surface (e.g., a surface oriented in the direction A) of the bodies 110, 120, and 130. The display 105 may include, for example, a liquid crystal display (LCD), a light-emitting diode (LED) display, an organic light-emitting diode (OLED) display, a microelectromechanical systems (MEMS) display, or an electronic paper display. The display 105 may display, for example, various types of contents (e.g., text, images, videos, icons, symbols, and/or the like) to the user. The display 105 may include a touch screen and may receive, for example, a touch, gesture, proximity, or hovering input using an electronic pen or a part of the user's body.

According to various embodiments, the display 105 may be implemented in a flexible or foldable form in which at least a portion is bendable or foldable. In this case, a display panel inside the display 105 may be implemented with an organic light-emitting diode (OLED) or a polymer material (such as polyimide (PI)).

According to an embodiment, the entire area of the display 105 may be implemented in a flexible form. In this case, the display 105 may be bendable according to the form of the bodies 110, 120, and 130. Alternatively, the display 105 may be bendable according to a movement or rotation of the bodies 110, 120, and 130.

According to another embodiment, a region of the display 105 (hereinafter, referred to as the first connecting region) adjacent to a first virtual axis I-I' between the first and second bodies 110 and 120 and a region of the display 105 (hereinafter, referred to as the second connecting region) adjacent to a second virtual axis II-II' between the second and third bodies 120 and 130 may be implemented in a flexible form, and other regions of the display 105 may be implemented in a rigid form.

According to another embodiment, the display 105 may be divided into a plurality of regions, and the extent to which the display 105 is bent may vary according to the regions. For example, the regions of the display 105 seated on the first and third bodies 110 and 130 may be implemented in a rigid form, and the first and second connecting regions may be implemented in a flexible form. The region of the display 105 seated on the second body 120 may be implemented in a semi-flexible form.

The bodies 110, 120, and 130 may include the first body 110, the second body 120, and the third body 130. The second body 120 may be disposed between the first body 110 and the third body 130. The second body 120 may be connected with the first body 110 in a first direction and may be connected with the third body 130 in a second direction opposite to the first direction.

According to various embodiments, the height of the second body 120 (or the length in the direction perpendicular to the direction C-D) may be the same as the height of the first and third bodies 110 and 130. The width of the second body 120 (or the length in the direction C-D) may be greater than the widths of the respective first and third bodies 110 and 130. For example, the width of the second body 120 may be greater than or equal to the sum of the width of the first body 110 and the width of the third body 130.

According to various embodiments, the thickness of the second body 120 (or the length in the direction A-B) may be less than the thicknesses (or the lengths in the direction A-B) of the respective first and third bodies 110 and 130. The first body 110 may have the same thickness as the third body 130.

According to various embodiments, a processor, a communication chip, a battery, and the like for operating the electronic device 101 may be mounted in at least one of the first and third bodies 110 and 130. A camera module, a sensor, a button (e.g., a volume button, a home button, or the like) may be mounted on, or exposed through, the outside of the first and third bodies 110 and 130. Wiring connected to the display 105 may be mounted in the second body 120.

According to various embodiments, the first body 110 may be folded toward the rear side of the electronic device 101 (in the direction B) while rotating about the first virtual axis I-I' between the first and second bodies 110 and 120. The third body 130 may be folded toward the rear side of the electronic device 101 (in the direction B) while rotating about the second virtual axis II-II' between the second and third bodies 120 and 130.

A central region 105a of the display 105 may be arranged so as to be directed toward the front side (the side oriented in the direction A) in the state 101a in which both the first and third bodies 110 and 130 are completely folded. The user may view contents, such as text, images, or the like, through the central region 105a of the display 105 and may use the electronic device 101 in the same way as a general smartphone.

According to various embodiments, a status bar, a touch button, a simple user notification, and the like may be output in the first and second connecting regions located on the left and right sides of the central region 105a.

A first side region 105b and a second side region 105c may be arranged so as to be directed toward the rear side of the display 105 (the side oriented in the direction B) in the state 101a in which both the first and third bodies 110 and 130 are completely folded. A camera module, a physical button, and the like mounted on one of the first and third bodies 110 and 130 may also be arranged on the rear side.

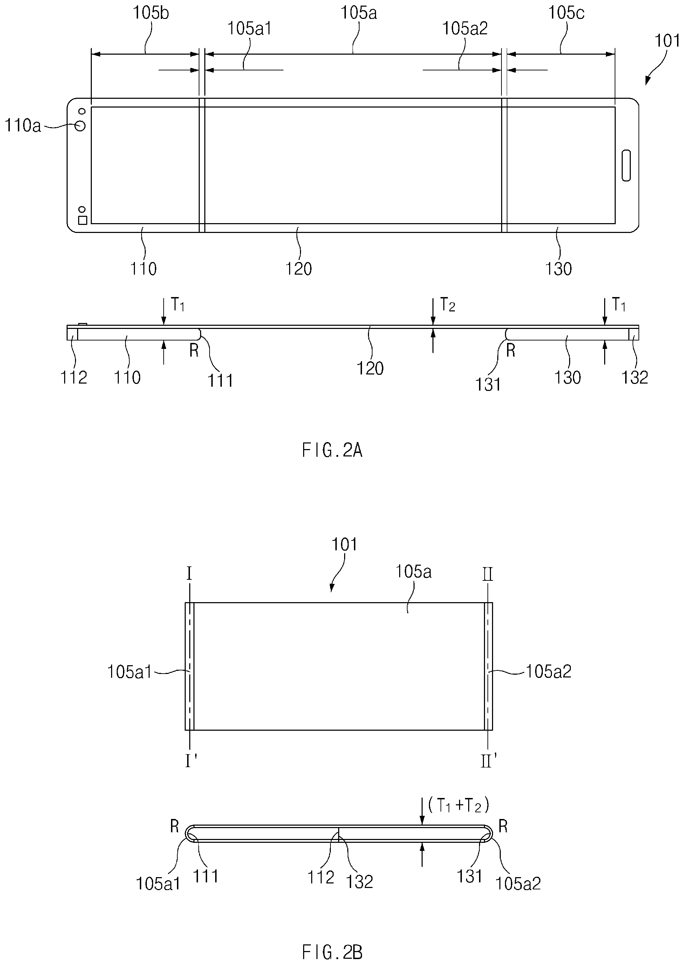

FIG. 2A illustrates an unfolded state of the electronic device, according to various embodiments.

Referring to FIG. 2A, in the unfolded state, the first to third bodies 110, 120, and 130 of the electronic device 101 may be sequentially arranged so as not to overlap each other. The second body 120 may be disposed between the first body 110 and the third body 130.

According to an embodiment, in the case where the central region 105a of the display 105 is of a rigid type, the display 105 may be maintained in an overall flat form. According to another embodiment, in the case where the central region 105a of the display 105 is of a semi-flexible type, the central region 105a of the display 105 may be partially curved due to the force of gravity.

The display 105 may include the first side region 105b, a first connecting region 105a1, the central region 105a, a second connecting region 105a2, and the second side region 105c.

The central region 105a may be mounted on the second body 120. The central region 105a may be disposed between the first and second connecting regions 105a1 and 105a2 (or between the first and second side regions 105b and 105c). The central region 105a may be implemented in a rigid form or a semi-flexible form.

The first side region 105b may be mounted on the first body 110. The first side region 105b may be implemented in a rigid form.

The second side region 105c may be mounted on the third body 130. The second side region 105c may be implemented in a rigid form.

The first connecting region 105a1 may be located between the central region 105a and the first side region 105b. The first connecting region 105a1 may be implemented in a flexible form that is foldable or bendable.

The second connecting region 105a2 may be located between the central region 105a and the second side region 105c. The second connecting region 105a2 may be implemented in a flexible form that is foldable or bendable.

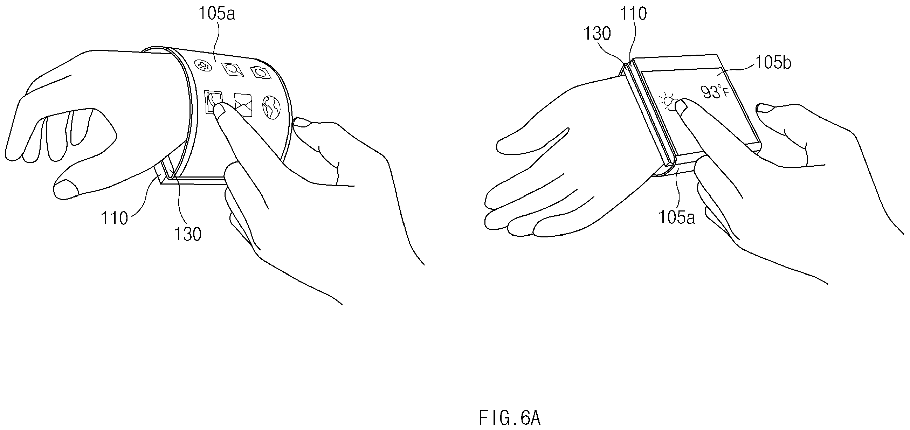

According to various embodiments, at least a portion of the display 105 may be implemented with a different material. For example, the central region 105a of the display 105 may be implemented by an E-ink method, which is used for an E-book, and the other regions of the display 105 may be implemented with a general display (e.g., an OLED). In the case where the central region 105a is implemented by an E-ink method, the central region 105a may consume relatively low power. Additional information about the case where at least a portion of the display 105 is implemented with a different material may be provided with reference to FIG. 6A.

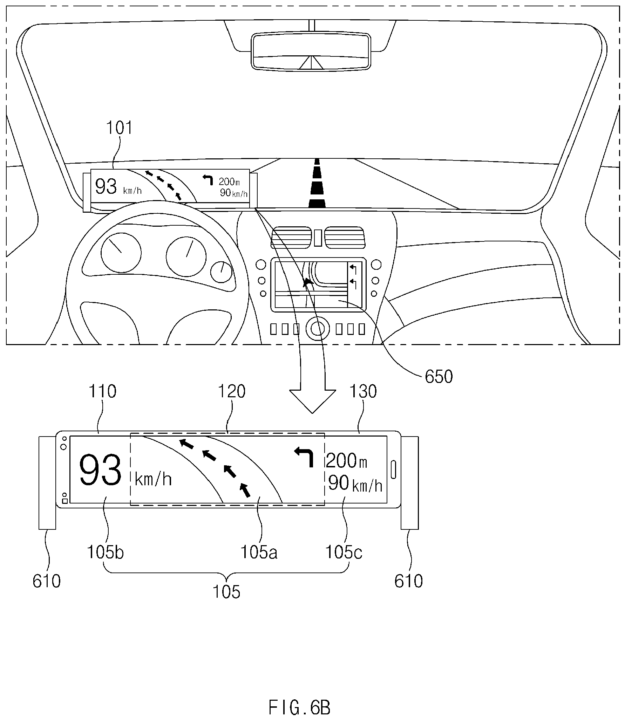

According to various embodiments, at least a portion of the display 105 may be implemented in the form of a transparent display. For example, the central region 105a of the display 105 may be implemented with a transparent display. Additional information about the case where a portion of the display 105 is implemented with a transparent display may be provided with reference to FIG. 6B.

The first and third bodies 110 and 130 may have a thickness of T1. The thickness T1 may be greater than the thickness T2 of the second body 120. The first and third bodies 110 and 130 may have a larger internal mounting space than the second body 120 and may include various elements therein, such as a processor, a memory, a communication circuit, a battery, and the like.

A side surface 111 of the first body 110 that is adjacent to the second body 120 may be a curved surface. For example, the side surface 111 may be curved outwards toward the second body 120 and may have a curvature of R. The side surface 111 may allow the first connecting region 105a1 to be bent along the curved surface. The curved side surface 111 may prevent the display 105 from cracking in the process in which the first body 110 rotates.

A side surface 131 of the third body 130 that is adjacent to the second body 120 may be a curved surface. For example, the side surface 131 may be curved outwards toward the second body 120 and may have a curvature of R. The side surface 131 may allow the second connecting region 105a2 to be bent along the curved surface. The curved side surface 131 may prevent the display 105 from cracking in the process in which the third body 130 rotates. According to various embodiments, the side surface 111 may have the same curvature as the side surface 131.

FIG. 2B illustrates a folded state of the electronic device, according to various embodiments.

Referring to FIG. 2B, portability of the electronic device 101 may be enhanced in the folded state. A user may use the folded electronic device 101 in the same way as a general smartphone.

The first body 110 may be folded while rotating about the first virtual axis I-I' in the first connecting region 105a1 such that a portion of the display 105 (e.g., the first side region 105b of FIG. 2A) is directed toward the rear side of the electronic device 101. The third body 130 may be folded while rotating about the second virtual axis II-II' in the second connecting region 105a2 such that a portion of the display 105 (e.g., the second side region 105c of FIG. 2A) is directed toward the rear side of the electronic device 101.

According to various embodiments, the first and second bodies 110 and 120 may include, at points adjacent to the first connecting region 105a1, first fixing parts (or stoppers) (not illustrated) for preventing the first body 110 from rotating toward the front side (the side to which the central region 105a is directed). The second and third bodies 120 and 130 may include, at points adjacent to the second connecting region 105a2, second fixing parts (or stoppers) (not illustrated) for preventing the third body 130 from rotating toward the front side (the side to which the central region 105a is directed). The first and second fixing parts may restrict the rotational direction of the first or third body 110 or 130 to prevent the electronic device 101 from being broken. For example, the first and second fixing parts may have a protrusion shape protruding outwards.

The user may use the electronic device 101 in the same way as a general smartphone by using the central region 105a. The first and second connecting regions 105a1 and 105a2 may be used in the form of an edge display. For example, the first and second connecting regions 105a1 and 105a2 may output a status bar, a touch button, a simple user notification, and the like.

According to various embodiments, in the folded state, the electronic device 101 may have a constant thickness as a whole. For example, the thickness of the electronic device 101 may be equal to the sum of the thicknesses T1 and T2.

A distal end portion 112 of the first body 110 and a distal end portion 132 of the third body 130 may make contact with each other, or may be adjacent to each other, on the rear side of the electronic device 101.

According to an embodiment, the distal end portion 112 of the first body 110 and the distal end portion 132 of the third body 130 may include coupling structures (not illustrated) by which the distal end portions 112 and 132 are coupled together. For example, the coupling structures may be implemented in a form including a magnetic material (e.g., a magnet) or in a form in which mechanical coupling is possible (e.g., a protrusion and an opening).

According to another embodiment, the first and third bodies 110 and 130 may be coupled and secured to the second body 120 on the rear side of the electronic device 101. For example, the second body 120 may include a magnetic material, and the first and third bodies 110 and 130 may include a metal material. In a folded state, the first or third body 110 or 130 may be coupled to a portion of the second body 120 by a magnetic force.

The first connecting region 105a1 may be bent along the curved side surface 111 of the first body 110. The second connecting region 105a2 may be bent along the curved side surface 131 of the third body 130.

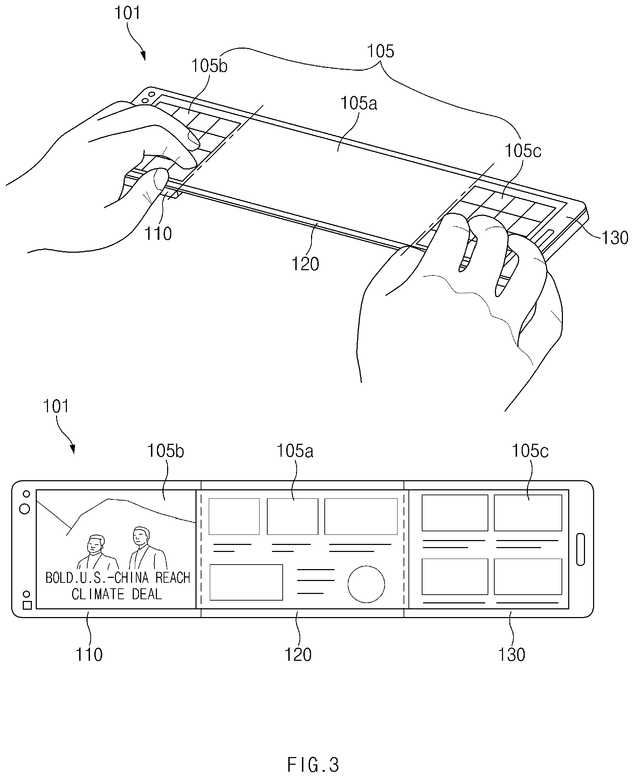

FIG. 3 illustrates an example of the use of the electronic device in an unfolded state, according to various embodiments. FIG. 3 is merely illustrative, and the present disclosure is not limited thereto.

Referring to FIG. 3, the electronic device 101 may provide a relatively wide contents output area to a user in the state in which the first and third bodies 110 and 130 are unfolded.

According to an embodiment, the electronic device 101 may output different contents in the central region 105a, the first side region 105b, and the second side region 105c. For example, the electronic device 101 may output a first part of a keyboard, which is configured to receive a user input, in the first side region 105b and may output a second part of the keyboard in the second side region 105c. The electronic device 101 may output, in the central region 105a, contents that the user inputs by using the keyboard.

The electronic device 101 may have typing regions (the first side region 105b and the second side region 105c) and a contents output region (the central region 105a) that are distinguished from one another, and thus may allow the user to type with both of his/her hands and may lower the possibility of making a typing error. Furthermore, since the contents output region (the central region 105a) is not hidden by the keyboard image, the electronic device 101 may provide convenience to the user.

In another example, the electronic device 101 may simultaneously provide a large amount of contents to the user by using the relatively wide display. In the case where the user views a web page, the web page may be sequentially displayed in the first side region 105b, the central region 105a, and the second side region 105c, and thus the user may rapidly and conveniently view the contents of the web page without any separate touch or dragging operation.

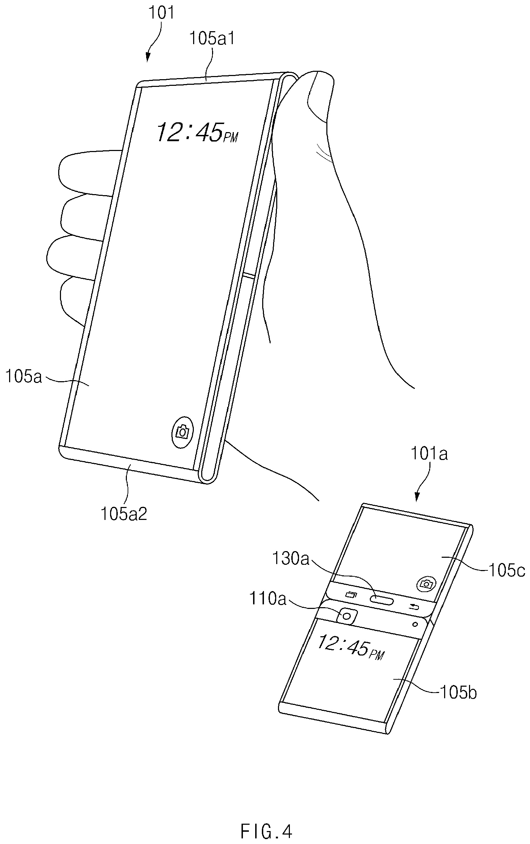

FIG. 4 illustrates an example of the use of the electronic device in a folded state, according to various embodiments.

Referring to FIG. 4, the electronic device 101 may be used with the first and third bodies 110 and 130 folded toward the rear side of the electronic device 101. In the folded state, the total size of the electronic device 101 may decrease, and a user may use the electronic device 101 in a form similar to a general smartphone. For example, the user may view a message or make a telephone call connection by using the central region 105a of the display 105.

The first and second connecting regions 105a1 and 105a2 may be used in the form of an edge display. For example, the first and second connecting regions 105a1 and 105a2 may output a status bar, a touch button, a simple user notification, and the like.

In the folded state, the first and second side regions 105b and 105c may be disposed on the rear side of the electronic device 101. The first and second side regions 105b and 105c may be used as a sub-display, or may be restricted in use (e.g., may be in a screen-off state) to prevent a touch malfunction caused by the user's grasp.

According to various embodiments, in the folded state, a camera module 110a and a physical button 130a mounted on the first body 110 and the third body 130 may be disposed on the rear side of the electronic device 101.

According to various embodiments, an image captured by the camera module 110a may be output in at least one of the central region 105a, the first side region 105b, and the second side region 105c according to photographing forms. For example, in the case where the user takes a selfie by using the camera module 110a, the user may take a photograph or video while viewing captured images displayed in the first or second region 105b or 105c in real time. In another example, in the case where the user photographs a subject around the user, the user may take a photograph or video while viewing captured images displayed in the central region 105a in real time.

According to various embodiments, the physical button 130a may be used in an authentication process, such as fingerprint recognition. In the case where the user holds the folded electronic device 101 and touches the physical button 130a on the rear side of the electronic device 101, a fingerprint recognition process may be performed, and a screen-off state of the central region 105a may be released.

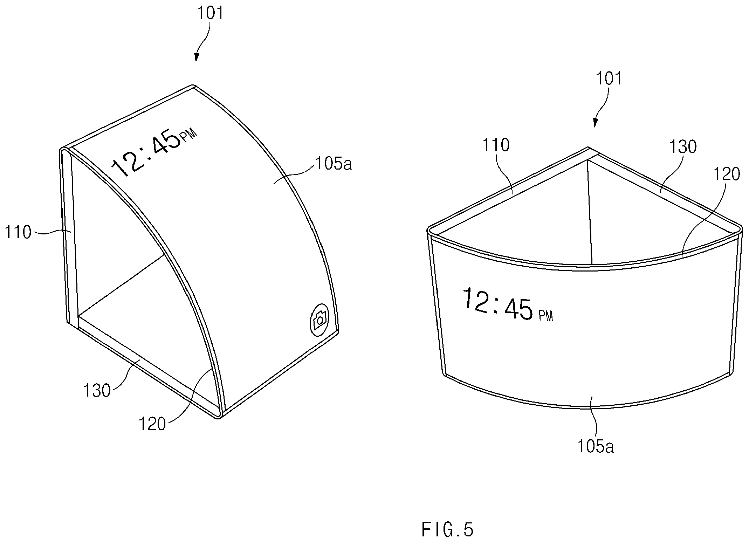

FIG. 5 illustrates an example in which the electronic device is used in a three-dimensional form, according to various embodiments. FIG. 5 is merely illustrative, and the present disclosure is not limited thereto.

Referring to FIG. 5, in the case where the central region 105a of the display 105 is implemented in a flexible or semi-flexible form, the electronic device 101 may be used in a form in which the first and third bodies 110 and 130 are coupled together in three dimensions (e.g., coupled perpendicular to each other).

For example, the first and third bodies 110 and 130 may be coupled perpendicular to each other on the rear side of the electronic device 101. The first and third bodies 110 and 130 may include, on distal ends thereof, coupling structures (not illustrated) using a magnetic material.

In the case where the first and third bodies 110 and 130 are coupled perpendicular to each other, the central region 105a of the display 105 may be curved outwards. A user may couple the first and third bodies 110 and 130 in a three-dimensional shape, as illustrated in FIG. 5, and may use the electronic device 101 in a form similar to a picture frame or a table clock.

FIG. 6A illustrates an example in which the electronic device is used in a wearable form, according to various embodiments. FIG. 6A is merely illustrative, and the present disclosure is not limited thereto.

Referring to FIG. 6A, in the case where the central region 105a of the display 105 is implemented in a flexible or semi-flexible form, the electronic device 101 may be worn in a band or smart watch form on a human body, with the first and third bodies 110 and 130 coupled together.

For example, the first and third bodies 110 and 130 may be coupled parallel to each other on the rear side of the electronic device 101. While FIG. 6 illustrates that the first body 110 is coupled to cover the third body 130, the first and third bodies 110 and 130 are not limited thereto. For example, the third body 130 may be coupled to cover the first body 110.

For example, a user may view a message or do a search on the Internet by using the central region 105a of the display 105. Also, the user may use the electronic device 101 in a form similar to a smart watch by using the first side region 105b exposed to the outside.

According to various embodiments, at least a portion of the display 105 may be implemented with a material different from the material of the other portions. For example, the central region 105a of the display 105 may be implemented by an E-ink method, which is used for an E-book, and the first and second side regions 105b and 105c of the display 105 may be implemented in a general display form (e.g., an OLED).

The user may check time or view a message by using the central region 105a implemented by an E-ink method, with the electronic device 101 worn on the user's wrist. For example, the central region 105a may be maintained in an always-on state. Since the central region 105a is implemented by an E-ink method, the central region 105a may consume relatively low power. In this case, the first and second side regions 105b and 105c may be in a deactivated state, such as a screen-off state. The first or second side region 105b or 105c may be activated in the case where a specified event occurs (e.g., in the case where rotation of the user's wrist is sensed). The first or second side region 105b or 105c may be used in the case where a video playback application, a web browser application, or the like is executed.

FIG. 6B illustrates an example of the use of the electronic device in the case where a portion of the display is implemented with a transparent display, according to various embodiments. FIG. 6B is merely illustrative, and the present disclosure is not limited thereto.

Referring to FIG. 6B, the electronic device 101 may have the display 105, at least a portion of which is implemented in a transparent display form. For example, the central region 105a of the display 105 may be implemented with a transparent display.

In the case where the central region 105a is implemented with a transparent display, the second body 120 may include an opening (e.g., a hole) (not illustrated) in a region thereof that corresponds to the central region 105a. Light passing through the opening may reach the central region 105a, which is a transparent display.

According to an embodiment, the electronic device 101 may be mounted in a vehicle. In an unfolded state, the electronic device 101 may be secured to an upper end of a dashboard through a holder 610. The first and third bodies 110 and 130 of the electronic device 101 may be coupled with the holder 610. For example, the first and third bodies 110 and 130 may be coupled with the holder 610 through a magnetic element (e.g., a magnet).

The first and second side regions 105b and 105c of the display 105 may output one integrated contents together with the central region 105a, or may output different contents independently of the central region 105a.

In the case where contents (e.g., a navigation map) is displayed on a display 650 mounted on a body of the vehicle, a user may have difficulty simultaneously keeping his/her eyes on the display 650 and the front while driving the vehicle. Due to this, the possibility of an accident may rise. In contrast, in the case where the electronic device 101 is disposed on a front window of the vehicle, the user may watch an object ahead while viewing contents (e.g., a navigation map) output through the central region 105a, which is a transparent display.

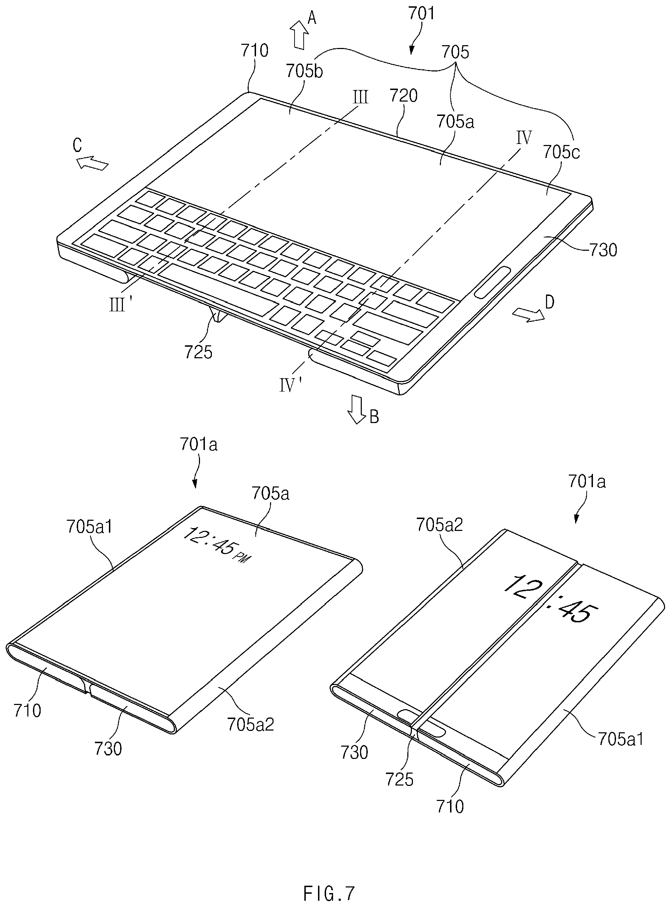

FIG. 7 illustrates an electronic device in a tablet form, according to various embodiments.

Referring to FIG. 7, an electronic device 701 may include a flexible display 705, at least a portion of which is foldable or bendable, and bodies 710, 720, and 730 on which the display 705 is mounted. Among the bodies 710, 720, and 730, the first body 710 and the third body 730 may be unfolded to the left side and the right side of the electronic device 701 (in the directions C and D), or may be folded toward the rear side of the electronic device 701 (in the direction B).

In the case where the bodies 710 and 730 are unfolded, the electronic device 701 may simultaneously provide a large amount of contents (text, images, videos, and the like) to a user through a wide screen. In contrast, in the case where the bodies 710 and 730 are folded, portability of the electronic device 701 may be enhanced. The user may carry the folded electronic device 701 in his/her hand, or may store the folded electronic device 701 in his/her bag or pocket.

The characteristics of elements of the electronic device 701 may be the same as or similar to the characteristics of the corresponding elements in FIG. 1.

According to various embodiments, in the case where the first and third bodies 710 and 730 are unfolded, the electronic device 701 may have the same size as, or a size similar to, that of a general tablet PC (e.g., a 7-inch display). The height of the bodies 710, 720, and 730 (or the length in the direction perpendicular to the direction C-D) may be greater than the height of the bodies 110, 120, and 130 in FIG. 1.

According to various embodiments, the second body 720 may include a support part (or a reinforcing rib) 725 on the opposite side to the display 705. The support part 725 may extend in the direction perpendicular to the C-D direction and may prevent the second body 720 from being bent by the force of gravity.

According to various embodiments, the electronic device 701 may output, on a lower side of the display 705, a keyboard for receiving a user input. The support part 725 may prevent the second body 720 from being bent while the user is typing.

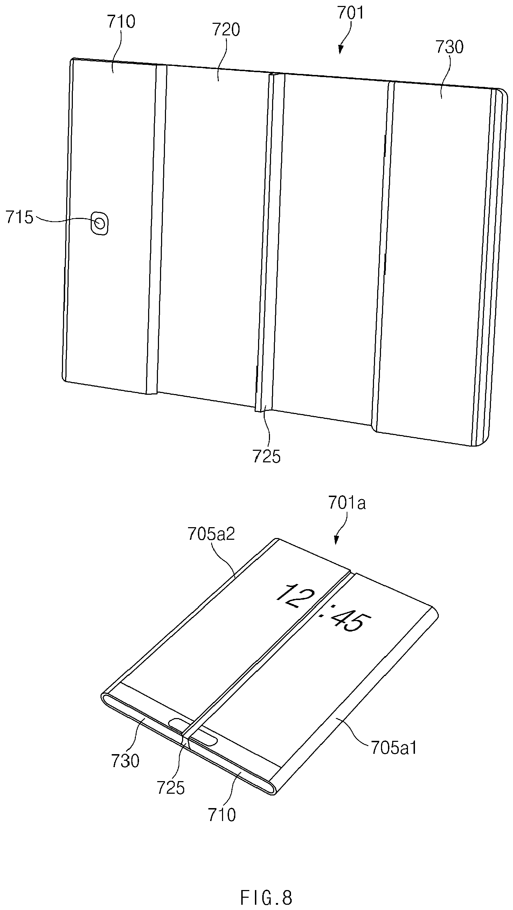

FIG. 8 illustrates the rear side of the electronic device of FIG. 7, according to various embodiments.

Referring to FIG. 8, the first body 710 (or the third body 730) may include a camera module 715 on the rear side thereof (on the opposite side to the display 705). The user may take an image by using the camera module 715 in the state in which the electronic device 701 is unfolded. The image acquired by the camera module 715 may be output on at least a portion of the display 705.

The support part 725 may be disposed on the rear side of the second body 720. The support part 725 may have a bar shape that has a specified thickness and extends along the rear side of the second body 720. The support part 725 may support the second body 720.

In the case where the electronic device 701 is folded, distal ends of the first and third bodies 710 and 730 may be located adjacent to the support part 725, or may make contact with the support part 725. According to various embodiments, the support part 725 may be implemented to have the same material and color as the first or third body 710 or 730. Furthermore, the support part 725 may have the same thickness as the first or third body 710 or 730. In this case, if the first or third body 710 or 730 is folded toward the rear side of the electronic device 701, the first or third body 710 or 730 and the support part 725 may not be well distinguished from each other in the externally visible portions.

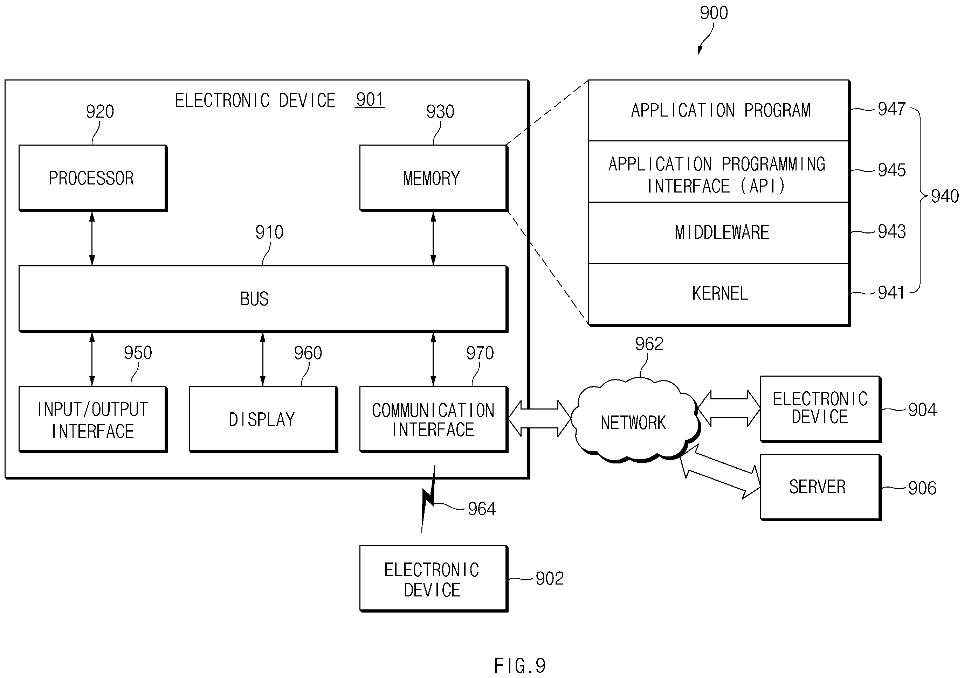

FIG. 9 illustrates an electronic device in a network environment according to an embodiment of the present disclosure.

An electronic device 901 in a network environment 900 according to various embodiments of the present disclosure will be described with reference to FIG. 9. The electronic device 901 may include a bus 910, a processor 920, a memory 930, an input/output interface 950, a display 960, and a communication interface 970. In various embodiments of the present disclosure, at least one of the foregoing elements may be omitted or another element may be added to the electronic device 901.

The bus 910 may include a circuit for connecting the above-mentioned elements 910 to 970 to each other and transferring communications (e.g., control messages and/or data) among the above-mentioned elements.

The processor 920 may include at least one of a central processing unit (CPU), an application processor (AP), or a communication processor (CP). The processor 920 may perform data processing or an operation related to communication and/or control of at least one of the other elements of the electronic device 901.

The memory 930 may include a volatile memory and/or a nonvolatile memory. The memory 930 may store instructions or data related to at least one of the other elements of the electronic device 901. According to an embodiment of the present disclosure, the memory 930 may store software and/or a program 940. The program 940 may include, for example, a kernel 941, a middleware 943, an application programming interface (API) 945, and/or an application program (or an application) 947. At least a portion of the kernel 941, the middleware 943, or the API 945 may be referred to as an operating system (OS).

The kernel 941 may control or manage system resources (e.g., the bus 910, the processor 920, the memory 930, or the like) used to perform operations or functions of other programs (e.g., the middleware 943, the API 945, or the application program 947). Furthermore, the kernel 941 may provide an interface for allowing the middleware 943, the API 945, or the application program 947 to access individual elements of the electronic device 901 in order to control or manage the system resources.

The middleware 943 may serve as an intermediary so that the API 945 or the application program 947 communicates and exchanges data with the kernel 941.

Furthermore, the middleware 943 may handle one or more task requests received from the application program 947 according to a priority order. For example, the middleware 943 may assign at least one application program 947 a priority for using the system resources (e.g., the bus 910, the processor 920, the memory 930, or the like) of the electronic device 901. For example, the middleware 943 may handle the one or more task requests according to the priority assigned to the at least one application, thereby performing scheduling or load balancing with respect to the one or more task requests.

The API 945, which is an interface for allowing the application 947 to control a function provided by the kernel 941 or the middleware 943, may include, for example, at least one interface or function (e.g., instructions) for file control, window control, image processing, character control, or the like.

The input/output interface 950 may serve to transfer an instruction or data input from a user or another external device to (an)other element(s) of the electronic device 901. Furthermore, the input/output interface 950 may output instructions or data received from (an)other element(s) of the electronic device 901 to the user or another external device.

The display 960 may include, for example, a liquid crystal display (LCD), a light-emitting diode (LED) display, an organic light-emitting diode (OLED) display, a microelectromechanical systems (MEMS) display, or an electronic paper display. The display 960 may present various content (e.g., a text, an image, a video, an icon, a symbol, or the like) to the user. The display 960 may include a touch screen, and may receive a touch, gesture, proximity or hovering input from an electronic pen or a part of a body of the user.

The communication interface 970 may set communications between the electronic device 901 and an external device (e.g., a first external electronic device 902, a second external electronic device 904, or a server 906). For example, the communication interface 970 may be connected to a network 962 via wireless communications or wired communications so as to communicate with the external device (e.g., the second external electronic device 904 or the server 906).

The wireless communications may employ at least one of cellular communication protocols such as long-term evolution (LTE), LTE-advance (LTE-A), code division multiple access (CDMA), wideband CDMA (WCDMA), universal mobile telecommunications system (UMTS), wireless broadband (WiBro), or global system for mobile communications (GSM). The wireless communications may include, for example, a short-range communications 964. The short-range communications may include at least one of wireless fidelity (Wi-Fi), Bluetooth, near field communication (NFC), magnetic stripe transmission (MST), or GNSS.

The MST may generate pulses according to transmission data and the pulses may generate electromagnetic signals. The electronic device 901 may transmit the electromagnetic signals to a reader device such as a POS (point of sales) device. The POS device may detect the magnetic signals by using a MST reader and restore data by converting the detected electromagnetic signals into electrical signals.

The GNSS may include, for example, at least one of global positioning system (GPS), global navigation satellite system (GLONASS), BeiDou navigation satellite system (BeiDou), or Galileo, the European global satellite-based navigation system according to a use area or a bandwidth. Hereinafter, the term "GPS" and the term "GNSS" may be interchangeably used. The wired communications may include at least one of universal serial bus (USB), high definition multimedia interface (HDMI), recommended standard 832 (RS-232), plain old telephone service (POTS), or the like. The network 962 may include at least one of telecommunications networks, for example, a computer network (e.g., local area network (LAN) or wide area network (WAN)), the Internet, or a telephone network.

The types of the first external electronic device 902 and the second external electronic device 904 may be the same as or different from the type of the electronic device 901. According to an embodiment of the present disclosure, the server 906 may include a group of one or more servers. A portion or all of operations performed in the electronic device 901 may be performed in one or more other electronic devices (e.g., the first electronic device 902, the second external electronic device 904, or the server 906). When the electronic device 901 should perform a certain function or service automatically or in response to a request, the electronic device 901 may request at least a portion of functions related to the function or service from another device (e.g., the first electronic device 902, the second external electronic device 904, or the server 906) instead of or in addition to performing the function or service for itself. The other electronic device (e.g., the first electronic device 902, the second external electronic device 904, or the server 906) may perform the requested function or additional function, and may transfer a result of the performance to the electronic device 901. The electronic device 901 may use a received result itself or additionally process the received result to provide the requested function or service. To this end, for example, a cloud computing technology, a distributed computing technology, or a client-server computing technology may be used.

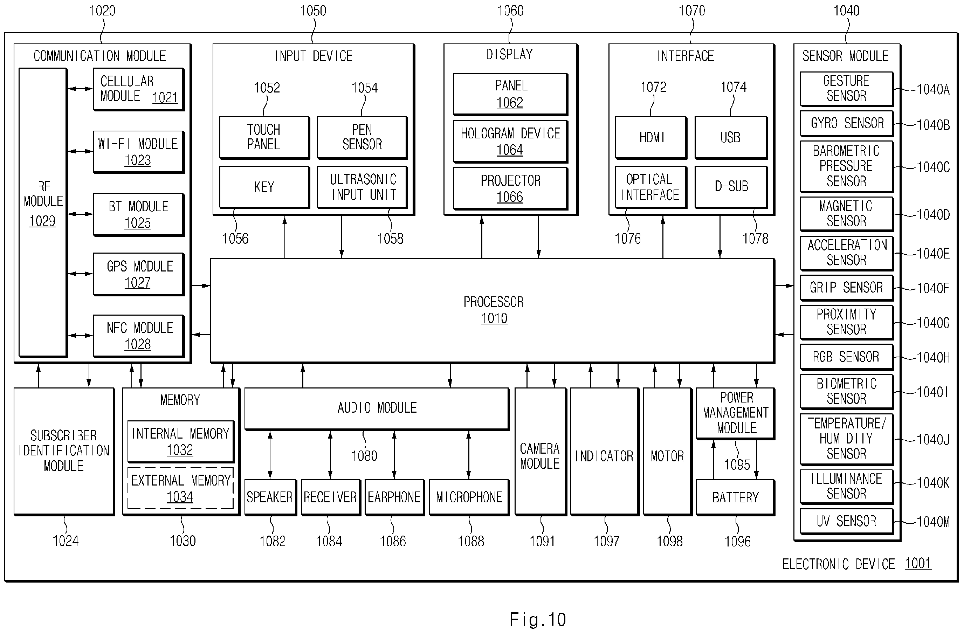

FIG. 10 is a block diagram illustrating an electronic device according to an embodiment of the present disclosure.

Referring to FIG. 10, an electronic device 1001 may include, for example, a part or the entirety of the electronic device 901 illustrated in FIG. 9. The electronic device 1001 may include at least one processor (e.g., AP) 1010, a communication module 1020, a subscriber identification module (SIM) 1024, a memory 1030, a sensor module 1040, an input device 1050, a display 1060, an interface 1070, an audio module 1080, a camera module 1091, a power management module 1095, a battery 1096, an indicator 1097, and a motor 1098.

The processor 1010 may run an operating system or an application program so as to control a plurality of hardware or software elements connected to the processor 1010, and may process various data and perform operations. The processor 1010 may be implemented with, for example, a system on chip (SoC). According to an embodiment of the present disclosure, the processor 1010 may further include a graphic processing unit (GPU) and/or an image signal processor. The processor 1010 may include at least a portion (e.g., a cellular module 1021) of the elements illustrated in FIG. 10. The processor 1010 may load, on a volatile memory, an instruction or data received from at least one of other elements (e.g., a nonvolatile memory) to process the instruction or data, and may store various data in a nonvolatile memory.

The communication module 1020 may have a configuration that is the same as or similar to that of the communication interface 970 of FIG. 9. The communication module 1020 may include, for example, a cellular module 1021, a Wi-Fi module 1023, a Bluetooth (BT) module 1025, a GPS module 1027, a NFC module 1028, and a radio frequency (RF) module 1029.

The cellular module 1021 may provide, for example, a voice call service, a video call service, a text message service, or an Internet service through a communication network. The cellular module 1021 may identify and authenticate the electronic device 1001 in the communication network using the subscriber identification module 1024 (e.g., a SIM card). The cellular module 1021 may perform at least a part of functions that may be provided by the processor 1010. The cellular module 1021 may include a communication processor (CP).

Each of the Wi-Fi module 1023, the Bluetooth module 1025, the GPS module 1027 and the NFC module 1028 may include, for example, a processor for processing data transmitted/received through the modules. According to some various embodiments of the present disclosure, at least a part (e.g., two or more) of the cellular module 1021, the Wi-Fi module 1023, the Bluetooth module 1025, the GPS module 1027, and the NFC module 1028 may be included in a single integrated chip (IC) or IC package.

The RF module 1029 may transmit/receive, for example, communication signals (e.g., RF signals). The RF module 1029 may include, for example, a transceiver, a power amp module (PAM), a frequency filter, a low noise amplifier (LNA), an antenna, or the like. According to another embodiment of the present disclosure, at least one of the cellular module 1021, the Wi-Fi module 1023, the Bluetooth module 1025, the GPS module 1027, or the NFC module 1028 may transmit/receive RF signals through a separate RF module.

The SIM 1024 may include, for example, an embedded SIM and/or a card containing the subscriber identity module, and may include unique identification information (e.g., an integrated circuit card identifier (ICCID)) or subscriber information (e.g., international mobile subscriber identity (IMSI)).

The memory 1030 (e.g., the memory 930) may include, for example, an internal memory 1032 or an external memory 1034. The internal memory 1032 may include at least one of a volatile memory (e.g., a dynamic RAM (DRAM), a static RAM (SRAM), a synchronous dynamic RAM (SDRAM), or the like), a nonvolatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, a NOR flash memory, or the like)), a hard drive, or a solid state drive (SSD).

The external memory 1034 may include a flash drive such as a compact flash (CF), a secure digital (SD), a Micro-SD, a Mini-SD, an extreme digital (xD), a MultiMediaCard (MMC), a memory stick, or the like. The external memory 1034 may be operatively and/or physically connected to the electronic device 1001 through various interfaces.

The sensor module 1040 may, for example, measure physical quantity or detect an operation state of the electronic device 1001 so as to convert measured or detected information into an electrical signal. The sensor module 1040 may include, for example, at least one of a gesture sensor 1040A, a gyro sensor 1040B, a barometric pressure sensor 1040C, a magnetic sensor 1040D, an acceleration sensor 1040E, a grip sensor 1040F, a proximity sensor 1040G, a color sensor 1040H (e.g., a red/green/blue (RGB) sensor), a biometric sensor 1040I, a temperature/humidity sensor 1040J, an illumination sensor 1040K, or an ultraviolet (UV) sensor 1040M. Additionally or alternatively, the sensor module 1040 may include, for example, an olfactory sensor (E-nose sensor), an electromyography (EMG) sensor, an electroencephalogram (EEG) sensor, an electrocardiogram (ECG) sensor, an infrared (IR) sensor, an iris recognition sensor, and/or a fingerprint sensor. The sensor module 1040 may further include a control circuit for controlling at least one sensor included therein. In some various embodiments of the present disclosure, the electronic device 1001 may further include a processor configured to control the sensor module 1040 as a part of the processor 1010 or separately, so that the sensor module 1040 is controlled while the processor 1010 is in a sleep state.

The input device 1050 may include, for example, a touch panel 1052, a (digital) pen sensor 1054, a key 1056, or an ultrasonic input device 1058. The touch panel 1052 may employ at least one of capacitive, resistive, infrared, and ultraviolet sensing methods. The touch panel 1052 may further include a control circuit. The touch panel 1052 may further include a tactile layer so as to provide a haptic feedback to a user.

The (digital) pen sensor 1054 may include, for example, a sheet for recognition which is a part of a touch panel or is separate. The key 1056 may include, for example, a physical button, an optical button, or a keypad. The ultrasonic input device 1058 may sense ultrasonic waves generated by an input tool through a microphone 1088 so as to identify data corresponding to the ultrasonic waves sensed.

The display 1060 (e.g., the display 960) may include a panel 1062, a hologram device 1064, or a projector 1066. The panel 1062 may have a configuration that is the same as or similar to that of the display 960 of FIG. 9. The panel 1062 may be, for example, flexible, transparent, or wearable. The panel 1062 and the touch panel 1052 may be integrated into a single module. The hologram device 1064 may display a stereoscopic image in a space using a light interference phenomenon. The projector 1066 may project light onto a screen so as to display an image. The screen may be disposed in the inside or the outside of the electronic device 1001. According to an embodiment of the present disclosure, the display 1060 may further include a control circuit for controlling the panel 1062, the hologram device 1064, or the projector 1066.

The interface 1070 may include, for example, an HDMI 1072, a USB 1074, an optical interface 1076, or a D-subminiature (D-sub) 1078. The interface 1070, for example, may be included in the communication interface 970 illustrated in FIG. 9. Additionally or alternatively, the interface 1070 may include, for example, a mobile high-definition link (MHL) interface, an SD card/multi-media card (MMC) interface, or an infrared data association (IrDA) interface.

The audio module 1080 may convert, for example, a sound into an electrical signal or vice versa. At least a portion of elements of the audio module 1080 may be included in the input/output interface 950 illustrated in FIG. 9. The audio module 1080 may process sound information input or output through a speaker 1082, a receiver 1084, an earphone 1086, or the microphone 1088.

The camera module 1091 is, for example, a device for shooting a still image or a video. According to an embodiment of the present disclosure, the camera module 1091 may include at least one image sensor (e.g., a front sensor or a rear sensor), a lens, an image signal processor (ISP), or a flash (e.g., an LED or a xenon lamp).

The power management module 1095 may manage power of the electronic device 1001. According to an embodiment of the present disclosure, the power management module 1095 may include a power management integrated circuit (PMIC), a charger integrated circuit (IC), or a battery or gauge. The PMIC may employ a wired and/or wireless charging method. The wireless charging method may include, for example, a magnetic resonance method, a magnetic induction method, an electromagnetic method, or the like. An additional circuit for wireless charging, such as a coil loop, a resonant circuit, a rectifier, or the like, may be further included. The battery gauge may measure, for example, a remaining capacity of the battery 1096 and a voltage, current or temperature thereof while the battery is charged. The battery 1096 may include, for example, a rechargeable battery and/or a solar battery.

The indicator 1097 may display a specific state of the electronic device 1001 or a part thereof (e.g., the processor 1010), such as a booting state, a message state, a charging state, or the like. The motor 1098 may convert an electrical signal into a mechanical vibration, and may generate a vibration or haptic effect. Although not illustrated, a processing device (e.g., a GPU) for supporting a mobile TV may be included in the electronic device 1001. The processing device for supporting a mobile TV may process media data according to the standards of digital multimedia broadcasting (DMB), digital video broadcasting (DVB), MediaFLO™, or the like.

Each of the elements described herein may be configured with one or more components, and the names of the elements may be changed according to the type of an electronic device. In various embodiments of the present disclosure, an electronic device may include at least one of the elements described herein, and some elements may be omitted or other additional elements may be added. Furthermore, some of the elements of the electronic device may be combined with each other so as to form one entity, so that the functions of the elements may be performed in the same manner as before the combination.

According to various embodiments, an electronic device includes a display, at least a portion of which is implemented in a flexible form, and first to third bodies on which the flexible display is mounted, wherein the second body is disposed between the first body and the third body, wherein the first body is rotatable about a first virtual axis between the first and second bodies, and wherein the third body is rotatable about a second virtual axis between the second and third bodies.

According to various embodiments, the first and third bodies have a first thickness, and the second body has a second thickness less than the first thickness.

According to various embodiments, the first and third bodies rotate in a direction opposite to an output direction of the flexible display.

According to various embodiments, the first and third bodies are rotatable to make contact with the rear side of the electronic device.

According to various embodiments, the respective first and third bodies include, on distal ends, coupling structures configured to couple the first and third bodies. The coupling structures are implemented with a magnetic material. The respective first and third bodies include coupling structures configured to couple the first and third bodies to the second body.

According to various embodiments, regions of the flexible display that are adjacent to the first and second axes are implemented in a flexible form.

According to various embodiments, a region of the flexible display that is mounted on the second body is implemented in a semi-flexible form. The first and third bodies include coupling structures by which distal ends of the respective first and third bodies are coupled perpendicular to each other. The first and third bodies include coupling structures by which the first and third bodies are coupled parallel to each other.

According to various embodiments, regions of the flexible display that are mounted on the first and third bodies are implemented in a rigid form.

According to various embodiments, the first body has a side surface that is adjacent to the first axis and that is curved outwards toward the second body, and the third body has a side surface that is adjacent to the second axis and that is curved outwards toward the second body.

According to various embodiments, the second body includes a support part on the opposite side to the flexible display. The support part extends from a region corresponding to the center of the flexible display so as to be perpendicular to the direction in which the first and third bodies are arranged.

According to various embodiments, the first and second bodies include first fixing parts attached to surfaces of the first and second bodies on which the flexible display is mounted, and the second and third bodies include second fixing parts attached to surfaces of the second and third bodies on which the flexible display is mounted.

According to various embodiments, the flexible display outputs a first part of a keyboard, which is configured to receive a user input, in a region of the flexible display that is mounted on the first body, and the flexible display outputs a second part of the keyboard in a region of the flexible display that is mounted on the third body.

According to various embodiments, the flexible display outputs at least one of a touch button, a status bar, and a user notification in regions adjacent to the first and second axes.

According to various embodiments, the flexible display outputs integrated contents as a whole in a state in which the first and third bodies are unfolded to opposite sides of the electronic device.

According to various embodiments, the flexible display outputs contents in a region of the flexible display that is mounted on the second body, in a case where the first and third bodies are brought into contact with the rear side of the electronic device.

According to various embodiments, an electronic device includes a display, at least a portion of which is implemented in a flexible form, and first to third bodies on which the display is mounted, wherein the first body supports a first side region of the display, wherein the third body supports a second side region of the display, wherein the second body supports a central region between the first and second side regions of the display, wherein the first body rotates about a first virtual axis between the first and second bodies such that the first side region is folded toward an opposite side to the central region, and wherein the third body rotates about a second virtual axis between the second and third bodies such that the second side region is folded toward the opposite side to the central region.

The term "module" used herein may represent, for example, a unit including one of hardware, software and firmware or a combination thereof. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations) according to various embodiments of the present disclosure may be implemented as instructions stored in a computer-readable storage medium in the form of a program module. In the case where the instructions are performed by a processor (e.g., the processor 920), the processor may perform functions corresponding to the instructions. The computer-readable storage medium may be, for example, the memory 930.

A computer-readable recording medium may include a hard disk, a floppy disk, a magnetic medium (e.g., a magnetic tape), an optical medium (e.g., CD-ROM, digital versatile disc (DVD)), a magneto-optical medium (e.g., a floptical disk), or a hardware device (e.g., a ROM, a RAM, a flash memory, or the like). The program instructions may include machine language codes generated by compilers and high-level language codes that can be executed by computers using interpreters. The above-mentioned hardware device may be configured to be operated as one or more software modules for performing operations of various embodiments of the present disclosure and vice versa.

A module or a program module according to various embodiments of the present disclosure may include at least one of the above-mentioned elements, or some elements may be omitted or other additional elements may be added. Operations performed by the module, the program module or other elements according to various embodiments of the present disclosure may be performed in a sequential, parallel, iterative or heuristic way. Furthermore, some operations may be performed in another order or may be omitted, or other operations may be added.

Although the present disclosure has been described with an exemplary embodiment, various changes and modifications may be suggested to one skilled in the art. It is intended that the present disclosure encompass such changes and modifications as fall within the scope of the appended claims.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a first body;
a second body;
a third body; and
a display mounted on the first, second and third bodies and having at least a portion implemented in a flexible form,
wherein the second body is disposed between the first body and the third body,
wherein the first body is rotatable about a first virtual axis between the first and second bodies, and
wherein the third body is rotatable about a second virtual axis between the second and third bodies.

2. The electronic device of claim 1, wherein the first and third bodies have a first thickness, and
wherein the second body has a second thickness less than the first thickness.

3. The electronic device of claim 1, wherein the first and third bodies rotate in a direction opposite to an output direction of the display.

4. The electronic device of claim 3, wherein the first and third bodies are rotatable to make contact with a rear side of the electronic device.

5. The electronic device of claim 4, wherein the respective first and third bodies include, on distal ends, coupling structures configured to couple the first and third bodies.

6. The electronic device of claim 5, wherein the coupling structures are implemented with a magnetic material.

7. The electronic device of claim 4, wherein the respective first and third bodies include coupling structures configured to couple the first and third bodies to the second body.

8. The electronic device of claim 1, wherein regions of the display that are adjacent to the first and second axes are implemented in a flexible form.

9. The electronic device of claim 1, wherein a region of the display that is mounted on the second body is implemented in a semi-flexible form.

10. The electronic device of claim 9, wherein the first and third bodies include coupling structures configured to couple distal ends of the respective first and third bodies perpendicular to each other.

11. The electronic device of claim 1, wherein regions of the display that are mounted on the first and third bodies are implemented in a rigid form.

12. The electronic device of claim 1, wherein the first body has a side surface that is adjacent to the first axis and that is curved outwards toward the second body, and
wherein the third body has a side surface that is adjacent to the second axis and that is curved outwards toward the second body.

13. The electronic device of claim 1, wherein the second body includes a support part on the opposite side to the display.

14. The electronic device of claim 13, wherein the support part extends from a region corresponding to the center of the display so as to be perpendicular to a direction in which the first and third bodies are arranged.

15. An electronic device comprising:
a display, at least a portion of which is implemented in a flexible form; and
a plurality of bodies on which the display is mounted,
wherein a first body supports a first side region of the display,
wherein a second body supports a central region between the first side region of the display and a second side region of the display,
wherein a third body supports the second side region of the display,
wherein the first body rotates about a first virtual axis between the first and second bodies such that the first side region is folded toward an opposite side to the central region, and
wherein the third body rotates about a second virtual axis between the second and third bodies such that the second side region is folded toward the opposite side to the central region.
